# DEMANDE DE BREVET EUROPEEN

(11) **EP 0 874 310 A1**
(43) Date de publication de la demande: **28.10.1998**
(21) Numéro de dépôt: 98400870.6
(22) Date de dépôt: 09.04.1998
(51) Int. Cl.: G06F 9/445, G06F 9/44

(54) **Procédé pour changer de version de logiciel dans un système informatique comportant plusieurs stations, et système informatique pour la mise en oeuvre de ce procédé**

(30) Priorité: 24.04.1997 FR 9705068
(71) Demandeur: ALCATEL ALSTHOM COMPAGNIE GENERALE D'ELECTRICITE, 75008 Paris (FR)
(72) Inventeur: Delannoy, Olivier, 92350 Le Plessis Robinson (FR)
(74) Mandataire: Sciaux, Edmond

(57) **Abrégé**

Procédé pour changer de version de logiciel dans un système informatique comportant plusieurs stations, et système informatique pour la mise en oeuvre de ce procédé

II consiste à :
- émettre un message (M21, M22), de la station maître vers chaque station esclave ;
- dans chaque station esclave qui reçoit ce message, valider la nouvelle version en faisant les préparatifs nécessaires pour utiliser celle-ci lors du prochain démarrage de cette station esclave ; donner à l'indicateur de cette station une nouvelle valeur (1) indiquant, s'il y a lieu, que les préparatifs sont réussis ; et sauvegarder la valeur de cet indicateur dans une mémoire non volatile ;
- émettre un autre message (M31, M32), de la station maître vers toutes les stations esclaves pour faire redémarrer ces stations esclaves ;
- puis faire redémarrer la station maître ;
- dans chaque station esclave qui redémarre, tester (3) la valeur mémorisée de l'indicateur, et :
   -- si elle indique que les préparatifs sont réussis, exécuter (4, 5) la nouvelle version ;
   -- si elle indique que les préparatifs ne sont pas réussis, n'exécuter ni la version courante ni la nouvelle version, et attendre (8) des ordres de la station maître.

## Description

L'invention concerne un procédé pour changer de version de logiciel dans un système informatique comportant plusieurs stations devant exécuter parallèlement plusieurs répliques d'un même logiciel.

Lorsque la version courante du logiciel doit être remplacée par une nouvelle version, il est nécessaire que toutes les stations concernées redémarrent avec la nouvelle version, en particulier si les deux versions ne sont pas absolument compatibles pour communiquer entre elles. Un procédé connu consiste à arrêter toutes les stations, installer la nouvelle version sur chacune, puis les faire redémarrer une par une sous la surveillance d'un opérateur humain qui vérifie que chaque station redémarre en exécutant effectivement la nouvelle version. Ce procédé a pour inconvénient d'interrompre le service pendant une durée importante.

Le but de l'invention est de proposer un procédé permettant de s'assurer, sans intervention d'un opérateur humain, que toutes les stations qui redémarrent après avoir reçu un ordre de changement de version, redémarrent toutes en exécutant effectivement la nouvelle version,.

Un premier objet de l'invention est un procédé pour changer de version de logiciel dans un système informatique comportant plusieurs stations. caractérisé en ce qu'il consiste à :
- choisir une station comme station maître, les autres stations étant appelées esclaves ;
- munir chaque station esclave d'un indicateur ;
- installer la nouvelle version dans chaque station, tout en continuant l'exécution de la version courante ;
et en ce qu'il consiste successivement et dans cet ordre, à :
- émettre un premier message, de la station maître vers toutes les stations esclaves ;
- lors de la réception de ce premier message dans une station esclave. donner à l'indicateur de cette station une valeur initiale indiquant que la nouvelle version n'est pas validée ;
- émettre un deuxième message, de la station maître vers chaque station esclave ;
- dans chaque station esclave qui reçoit ce deuxième message, valider la nouvelle version en faisant les préparatifs nécessaires pour utiliser celle-ci lors du prochain démarrage de cette station esclave ; donner à l'indicateur de cette station une nouvelle valeur indiquant, s'il y a lieu, que les préparatifs sont réussis ; et sauvegarder la valeur de cet indicateur dans une mémoire non volatile ;
- émettre un troisième message, de la station maître vers toutes les stations esclaves pour faire redémarrer ces stations esclaves ;
- puis faire redémarrer la station maître ;
- dans chaque station esclave qui redémarre, tester la valeur mémorisée de l'indicateur, et :
   -- si elle indique que les préparatifs sont réussis, exécuter la nouvelle version ;
   -- si elle indique que les préparatifs ne sont pas réussis, n'exécuter ni la version courante ni la nouvelle version, et attendre des ordres de la station.

Le procédé ainsi caractérisé évite que les stations démarrent en n'exécutant pas toutes la même version du logiciel. En effet, grâce à la présence d'un indicateur dans chaque station esclave, toute station esclave qui n'a pas réussi les préparatifs de changement de version ne poursuit pas l'exécution de l'ancienne version, mais attend des ordre de la station maître.

Un second objet de l'invention est un système informatique pour changer de version de logiciel dans un système informatique comportant plusieurs stations, une station étant appelée station maître, les autres stations étant appelées esclaves ;
caractérisé en ce qu'il comporte :
- des moyens pour mémoriser un indicateur dans chaque station esclave;
- des moyens pour installer la nouvelle version dans chaque station. tout en continuant l'exécution de la version courante ;
- des moyens pour émettre un premier message. de la station maître vers toutes les stations esclaves ;
- des moyens pour donner à l'indicateur de cette station une valeur initiale indiquant que la nouvelle version n'est pas validée lors de la réception de ce premier message dans une station esclave ;
- des moyens pour émettre ensuite un deuxième message. de la station maître vers chaque station esclave ;
- dans chaque station esclave, des moyens pour valider la nouvelle version en faisant les préparatifs nécessaires pour utiliser celle-ci lors du prochain démarrage de cette station esclave, la nouvelle version étant validée lorsque cette station reçoit ce deuxième message ; et des moyens pour donner à l'indicateur de cette station une nouvelle valeur indiquant, s'il y a lieu, que les préparatifs sont réussis ; et sauvegarder la valeur de cet indicateur dans une mémoire non volatile ;
- des moyens pour émettre un troisième message, de la station maître vers toutes les stations esclaves pour faire redémarrer ces stations esclaves ;
- des moyens pour faire redémarrer ensuite la station maître ;
- dans chaque station esclave. des moyens pour tester la valeur mémorisée de l'indicateur, et :
   -- si elle indique que les préparatifs sont réussis, exécuter la nouvelle version ;
   -- si elle indique que les préparatifs ne sont pas réussis, n'exécuter ni la version courante ni la nouvelle version, et attendre des ordres de la station maître.

Ces moyens sont de préférence des moyens logiciels qui sont exécutés par le processeur ou les processeurs de chaque station, comme le logiciel dont on veut changer de version. La réalisation de ces moyens logiciels est à la portée de l'Homme de l'Art à partir du moment où il connaît les fonctions à réaliser.

L'invention sera mieux comprise et d'autres caractéristiques apparaîtront à l'aide de la description ci-dessous et des figures l'accompagnant :
- La figure 1 représente schématiquement les échanges de messages entre les stations, dans un exemple de mise en oeuvre du procédé selon l'invention ;
- La figure 2 représente un organigramme des opérations réalisées dans chaque station esclave lorsqu'elle redémarre. dans cet exemple de mise en oeuvre.

Dans cet exemple, le système comporte une station maître MA et deux stations esclaves S1 et S2 . Chaque station mémorise dans une mémoire non volatile la valeur de la version du logiciel qu'elle doit exécuter lors du prochain démarrage de cette station. Dans les stations MA, S1, S2 la version qui doit être exécutée est désignée par Vma, V1, V2 respectivement. Chaque station esclave mémorise en outre dans une mémoire non volatile la valeur d'un indicateur qui indique si les préparatifs pour exécuter cette version ont réussi ou non à installer cette version. Cet indicateur est appelé P1 et P2 dans les stations S1 et S2 respectivement.

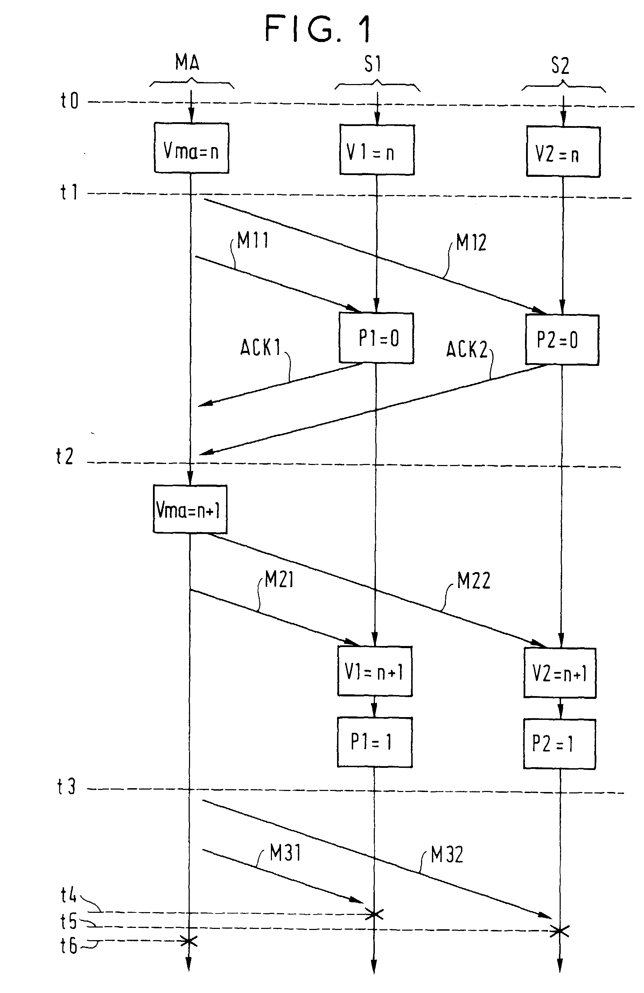

Le diagramme temporel représenté sur la figure 1 débute à un instant t0 où toutes les stations MA, S1, S2 exécutent une version n du logiciel considéré. A un instant t1, la station maître émet respectivement vers les stations esclaves S1 et S2 un message M11 et un message M12 qui leur commandent de réinitialiser à la valeur 0 leur indicateur, respectivement P1, P2. Elles exécutent cet ordre puis émettent chacune un message d'accusé de réception, respectivement ACK1 et ACK2, qui permet à la station maître MA de vérifier que ses messages M11 et M12 ont bien été reçus et exécutés par toutes les stations qui sont censées être actives. Si l'un de ces accusés de réception est manquant la station maître MA avorte le changement de version, et prévient l'utilisateur. Celi-ci relancera ultérieurement un changement de version.

A l'instant t2, la station maître M ayant constaté que toutes les stations censées être actives ont répondu par un accusé de réception, elle commence la réalisation du changement de version en faisant les préparatifs d'un changement de version. Les logiciels en version n+1 étant déjà présents dans toutes les stations. les préparatifs consistent simplement à indiquer aux stationsesclaves S1, S2 que cette version n+1 est la version à utiliser lors du prochain chargement des logiciels.

Elle donne la valeur n+1 à la variable Vma qui indique la version à exécuter lors du prochain démarrage de la station maître M. Puis elle émet des messages M21 et M22 pour commander aux stations esclaves S1 et S2 de donner la valeur n+1 à la variable V1 et à la variable V2. Si une station esclave réussit les préparatifs. elle donne ensuite la valeur 1 à son indicateur. Dans cet exemple, les deux stations esclaves S1 et S2 réussissent leurs préparatifs. et elles donnent donc la valeur 1 aux indicateurs P1 et P2.

La station maître MA attend pendant un délais suffisant pour que toutes les stations esclaves aient fait leurs préparatifs, puis, à un instant t3, elle émet des messages M31 et M32 destinés respectivement aux stations S1 et S2 pour commander leur redémarrage. Celles-ci redémarrent respectivement aux instants t4 et t5. Enfin, à l'instant t6, elle redémarre elle-même. Dans cet exemple, toutes les stations MA, S1, S2 redémarrent en exécutant la nouvelle version n+1 puisqu'elles avaient toutes réussi les préparatifs de changement de version.

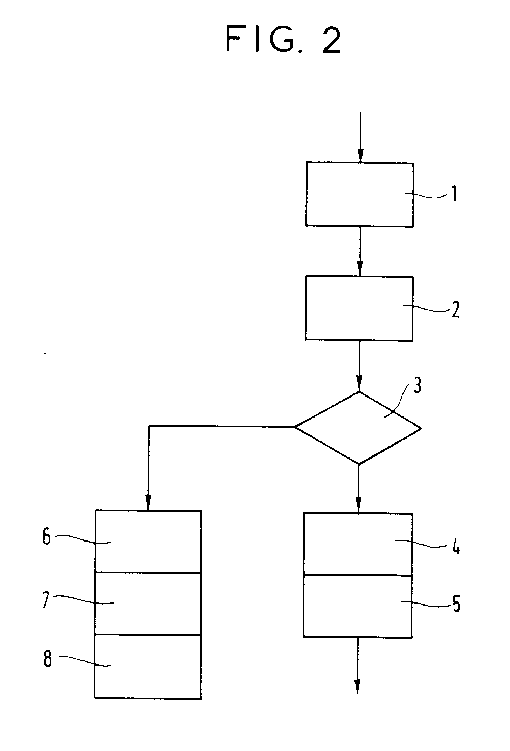

La figure 2 représente un organigramme des opérations réalisées dans chaque station esclave lorsqu'elle redémarre :
- Une opération 1 consiste à remettre à zéro toutes les variables qui ne sont pas sauvegardées.
- Une opération 2 consiste à réinitialiser avec des valeurs prédéterminées certaines variables.
- Une opération 3 consiste à tester la valeur de l'indicateur Pi de la station considérée :
   -- Si Pi=0 cela signifie que la station n'avait pas réussi ses préparatifs de changement de version. Des opérations 6, 7, 8 consistent alors à bloquer le fonctionnement de la station ; émettre un message à destination de la station maître pour lui signaler que cette station esclave est bloquée à cause un échec des préparatifs pour changer de version ; puis attendre des ordres en provenance de la station maître. pour remédier à cette situation.
   -- Si Pi=1 cela signifie que la station avait réussi ses préparatifs de changement de version. Elle va donc exécuter la nouvelle version. Une opération 4 consiste alors à émettre un message à destination de la station maître pour lui signaler que la station esclave est active. et une opération 5 consiste à compléter l'initialisation et le chargement des composants logiciels du système d'exploitation et des applications. La station est alors opérationnelle.

Le procédé selon l'invention est applicable de manière analogue pour un plus grand nombre de stations esclaves. D'autre part, il est applicable de manière analogue si chaque station est doublée par une station de secours qui est redondante le changement de version dans les stations normales est réalisé selon la description ci-dessus. Parallèlement et indépendamment, le même procédé est appliqué pour les stations de secours.

## Revendications

1. Procédé pour changer de version de logiciel dans un système informatique comportant plusieurs stations, caractérisé en ce qu'il consiste à :
- choisir une station (MA) comme station maître, les autres stations (S1, S2) étant appelées esclaves ;
- munir chaque station esclave d'un indicateur (P1, P2) ;
- installer la nouvelle version (n+1) dans chaque station, tout en continuant l'exécution de la version courante ;
et en ce qu'il consiste successivement et dans cet ordre, à :
- émettre un premier message (M11, M12), de la station maître vers toutes les stations esclaves ;
- lors de la réception de ce premier message dans une station esclave, donner à l'indicateur de cette station une valeur initiale (0) indiquant que la nouvelle version n'est pas validée ;
- émettre un deuxième message (M21, M22), de la station maître vers chaque station esclave ;
- dans chaque station esclave qui reçoit ce deuxième message, valider la nouvelle version en faisant les préparatifs nécessaires pour utiliser celle-ci lors du prochain démarrage de cette station esclave ; donner à l'indicateur de cette station une nouvelle valeur (1) indiquant, s'il y a lieu, que les préparatifs sont réussis ; et sauvegarder la valeur de cet indicateur dans une mémoire non volatile ;
- émettre un troisième message (M31, M32), de la station maître vers toutes les stations esclaves pour faire redémarrer ces stations esclaves ;
- puis faire redémarrer la station maître :
- dans chaque station esclave qui redémarre, tester (3) la valeur mémorisée de l'indicateur, et :
-- si elle indique que les préparatifs sont réussis, exécuter (4. 5) la nouvelle version ;
-- si elle indique que les préparatifs ne sont pas réussis. n'exécuter ni la version courante ni la nouvelle version. et attendre (8) des ordres de la station maître.

2. Dispositif pour changer de version de logiciel dans un système informatique comportant plusieurs stations, une station (MA) étant appelée station maître. les autres stations (S1, S2) étant appelées esclaves ;
caractérisé en ce qu'il comporte :
- des moyens pour mémoriser un indicateur (P1, P2) dans chaque station esclave;
- des moyens pour installer la nouvelle version (n+1) dans chaque station, tout en continuant l'exécution de la version courante ;
- des moyens pour émettre un premier message (M11, M12), de la station maître (MA) vers toutes les stations esclaves ;
- des moyens pour donner à l'indicateur de cette station une valeur initiale (0) indiquant que la nouvelle version n'est pas validée lors de la réception de ce premier message dans une station esclave ;
- des moyens pour émettre ensuite un deuxième message (M21, M22), de la station maître vers chaque station esclave ;
- dans chaque station esclave, des moyens pour valider la nouvelle version en faisant les préparatifs nécessaires pour utiliser celle-ci lors du prochain démarrage de cette station esclave, la nouvelle version étant validée lorsque cette station reçoit ce deuxième message; et des moyens pour donner à l'indicateur de cette station une nouvelle valeur (1) indiquant, s'il y a lieu, que les préparatifs sont réussis ; et sauvegarder la valeur de cet indicateur dans une mémoire non volatile ;
- des moyens pour émettre un troisième message (M31, M32), de la station maître vers toutes les stations esclaves pour faire redémarrer ces stations esclaves ;
- des moyens pour faire redémarrer ensuite la station maître ;
- dans chaque station esclave, des moyens pour tester (3) la valeur mémorisée de l'indicateur, et :
-- si elle indique que les préparatifs sont réussis. exécuter (4, 5) la nouvelle version ;
-- si elle indique que les préparatifs ne sont pas réussis. n'exécuter ni la version courante ni la nouvelle version, et attendre (8) des ordres de la station maître.
